Europäisches Patentamt

European Patent Office

Office européen des brevets

(11) Veröffentlichungsnummer: **0 222 079 B1**

(12) **EUROPÄISCHE PATENTSCHRIFT**

(45) Veröffentlichungstag der Patentschrift: **20.05.92**

(21) Anmeldenummer: **86111299.3**

(22) Anmeldetag: **14.08.86**

(51) Int. Cl.⁵: **G06F 15/70**

(54) **Verfahren zur optischen Prüfung von Leiterplatten.**

(30) Priorität: **12.11.85 DE 3540100**

(43) Veröffentlichungstag der Anmeldung:
**20.05.87 Patentblatt 87/21**

(45) Bekanntmachung des Hinweises auf die
Patenterteilung:
**20.05.92 Patentblatt 92/21**

(84) Benannte Vertragsstaaten:
**AT BE CH DE FR GB IT LI LU NL SE**

(56) Entgegenhaltungen:
EP-A- 0 032 592
EP-A- 0 149 852
GB-A- 2 124 362
US-A- 4 056 716

PATENT ABSTRACTS OF JAPAN, Band 8, Nr.
23 (P-251)[1460], 31. Januar 1984; & JP-A-58
179 343 (NIPPON DENKI K.K.) 20-10-1983

Idem

(73) Patentinhaber: **MANIA Elektronik Automatisation Entwicklung und Gerätebau GmbH
Technologiepark
W-6395 Weilrod 8(DE)**

(72) Erfinder: **Driller, Hubert, Dipl.-Phys.
Altkönigstrasse 11
W-6384 Schmitten 3(DE)**
Erfinder: **Mang, Paul
Weilbergstrasse 4
W-6384 Schmitten 3(DE)**

(74) Vertreter: **Ruschke, Hans Edvard et al
Patentanwälte Dipl.-Ing. Olaf Ruschke
Dipl.-Ing. Hans E. Ruschke Dipl.-Ing. Jürgen
Rost Dipl.-Chem. Dr. U. Rotter Pienzenauerstrasse 2
W-8000 München 80(DE)**

## Beschreibung

Die Erfindung betrifft ein Verfahren zur optischen Prüfung von Leiterplatten nach dem Oberbegriff des Patentanspruches 1.

Es ist ein derartiges Verfahren bekannt, bei dem eine sogenannte "Design Rule"-Prüfung durchgeführt wird, bei der im mikroskopischen Bereich Leiterbahnen und Abstände zwischen zwei Leiterbahnen auf ihre Dimension geprüft werden. Dabei werden die zu bestimmenden Minimalbreiten der Leiterbahnen und Abstände vom Benutzer der die Prüfung ausführenden Maschine eingegeben. Genauer gesagt tastet die Maschine zur Überprüfung der genannten Dimensionen die ihr jeweils vorgelegte Leiterplatten ab, ohne daß ein Vergleich mit einer Master- oder Referenz-Leiterplatte bzw. mit irgendwelchen Speicherwerten erfolgt. Es werden nur lokale Konfigurationen der Leiterplatte in Bezug auf die Einhaltung der vorgegebenen Minimalbreiten geprüft. Die Lage der Leiterbahnen spielt jedoch bei einer derartigen "Design Rule"-Prüfung keine Rolle.

Die Überprüfung erfolgt bekannterweise durch einen Abtastvorgang, bei dem das Bild in einzelne Bildpunkte zerlegt wird. Die dabei von einer Videokamera zeilenweise oder arrayweise gelieferten Videoinformationen werden analogisiert und aufbereitet, wobei unerwünschte Nebeneffekte beseitigt werden. Es entsteht dabei ein rasterisiertes Bild der Leiterplatte, das nur noch schwarze und weiße Bereiche enthält, die Metall- oder Nichtmetallgebieten entsprechen. Die so erhaltenen Schwarz-Weiß-Informationen werden zum Vergleich mit den vorgegebenen Mindestbreiten herangezogen.

Auf diese Weise kann ermittelt werden, ob die geforderten Mindestbedingungen der Leiterplatten erfüllt sind.

Zu den Vor- und Nachteilen dieses "Design Rule"-Verfahrens: Ein Nachteil dieses "Design Rule"-Prüfungsverfahrens besteht darin, daß nicht erkennbar ist, wenn z.B. falsche Leiterplatten geprüft werden, weil die Prüfung unabhängig von der Frage erfolgt, wie die Leiterbahnkonfiguration der Leiterplatten beschaffen ist. Es wird namlich immer nur unabhängig von dem speziellen Verlauf von Leiterbahnen geprüft, ob das Prüfobjekt den vorgegebenen Regeln (Mindestabstände, Mindestbreiten) entspricht. Allenfalls kann eine Prüfung auch im Hinblick auf Geometrieformen erfolgen, die nicht vorkommen dürfen. Bei derartigen verbotenen Geometrieformen handelt es sich beispielsweise um Leiterbahnen, die spitzwinklig verlaufen.

Ein weiterer Nachteil des genannten, bekannten Verfahrens besteht darin, daß es in Situationen versagt, in denen ein Fehler im Herstellungsverfahren von Leiterplatten zu einem Muster führt, das den vorgegebenen Designregeln (Mindestabstand, Mindestbreite) entspricht. Beispielsweise können durch dieses Verfahren unerwünschte Unterbrechungen von Leiterbahnen als richtig anerkannt werden, deren Abmessungen den vorgegebenen und erlaubten Leiterbahnabständen entsprechen. Wenn derartige Fehler nicht erkannt werden, können bei der weiteren Verwendung derartiger fehlerhafter Leiterplatten erhebliche Kosten entstehen. Diese sind beispielsweise auf den Verlust von Bauelementen bei der Bestückung und auf die fehlerhafte Funktion von bestückten derartigen Leiterplatten zurückzuführen.

Um solche Fehlermöglichkeiten auszuschließen, könnte man mit Referenzleiterplatten einen Bit für Bit-Vergleich ausführen. Auch wenn der Vergleich mit einem gröberen Raster, z.B. mit einer Reduktion von 4:1, ausgeführt wird, müssen ungeheuer große Datenmengen verarbeitet werden, so daß ein derartiger Vergleich mit einer Referenzleiterplatte kaum praktikabel ist.

Aus der Druckschrift EP-A-0 032 592 geht ein Verfahren hervor, bei dem mit einer Fernsehkamera ein Bild eines Prüfobjektes, bei dem es sich beispielsweise um eine Kachel oder dergleichen handelt, erzeugt, digitalisiert und in einem Speicher gespeichert wird. Das digitalisierte Bild wird dann in kleine Flächen unterteilt. Es folgt dann ein bildlicher Vergleich mit den entsprechenden Flächen eines Bezugsobjekts.

Aus der EP-A-0 149 852 geht ein Verfahren zum opto-elektronischen Prüfen eines Flächenmusters an einem Objekt hervor, bei dem ebenfalls eine Makroprüfung dadurch erfolgt, daß aufgenommene Bildpunkte in Bildfelder zusammengefaßt werden, die auf eine einzige charakteristische Bildinformation reduziert wird. Diese wird dann mit der entsprechenden Bildinformation eines Referenzbildes verglichen.

In der Druckschrift Patent + Abstracts of Japan, Band 8, Nr. 23 (P-251) (1460), 31.1.1984 und JP-A-5817934.3 (Nippon Denki K.K.) 20.10.1983 ist ein Verfahren beschrieben, bei dem eine zu untersuchende Leiterplatte in eine Mehrzahl von Fenstern unterteilt wird. Anschließend wird für jedes dieser Fenster untersucht, ob dieselbe Anzahl von Leiterbahnelementen vorhanden ist wie in dem entsprechenden Fenster einer Referenzplatte. Genauer gesagt wird dabei auf die Überein-Stimmung der Formen der Leiterbahnelemente geprüft.

Die Aufgabe der vorliegenden Erfindung besteht darin, ein wie eingangs genanntes Verfahren zur optischen Prüfung von Leiterplatten, das im mikroskopischen Bereich arbeitet und dabei die oben erläuterte "Design-Rule"-Prüfung ausführt, dahingehend zu verbessern, daß es so intelligent wird, daß eine Prüfung im makroskopischen Bereich bei einer erheblichen Reduzierung der zu speichernden und zu verarbeitenden Daten möglich ist.

Diese Aufgabe wird durch ein Verfahren der eingangs genannten Art gelöst, das durch die in dem kennzeichnenden Teil des Patentanspruches 1 angegebenen Merkmale gekennzeichnet ist.

Der wesentliche Vorteil des erfindungsgemäßen Verfahrens, bei dem neben der bekannten Prüfung im mikroskopischen Bereich auf die Einhaltung der Abmessungen der Leiterbahnen und der Abstände zwischen den Leiterbahnen eine Prüfung im makroskopischen Bereich erfolgt, besteht darin, daß das Verfahren erkennen kann, ob gerade bestimmte Leiterplatten geprüft werden oder nicht. Dabei sind vorteilhafterweise wesentlich weniger Informationen zu verarbeiten bzw. auszuwerten, als dies bei einem Bit für Bit-Vergleich mit einer Referenzleiterplatte erforderlich ist. Dies führt dazu, daß das erfindungsgemäße Prüfungsverfahren mit vergleichsweise einfach aufgebauten elektronischen Schaltungen bzw. Einrichtungen ausgeführt werden kann.

Im Hinblick auf die Reduzierung von Information beim Abspeichern des Bildes eines Fensters kann es vorteilhaft sein, im makroskopischen Bereich ausschließlich eine Grauwerterfassung auszuführen. Besonders vorteilhaft im Hinblick auf die zu verarbeitende Information und auf die Empfindlichkeit ist es, fensterweise neben der Grauwerterfassung auch eine Schwerpunktbestimmung auszuführen. Besonders vorteilhaft ist es, neben der Grauwerterfassung oder neben der Grauwert- und Schwerpunkterfassung fensterweise auch einen Granulationswert zu bestimmen, um beim Herstellungsprozeß bewirkte Verbreiterungen bzw. Verschmälerungen der Leiterbahnen als tolerierbar erfassen zu können.

Im folgenden werden die Erfindung und deren Ausgestaltungen im Zusammenhang mit den Figuren erläutert. Es zeigt:

Fig. 1     eine zu prüfende Leiterplatte; und
Fig. 2     eine Weiterbildung der Erfindung.

Zu der Erfindung führten die folgenden Überlegungen:

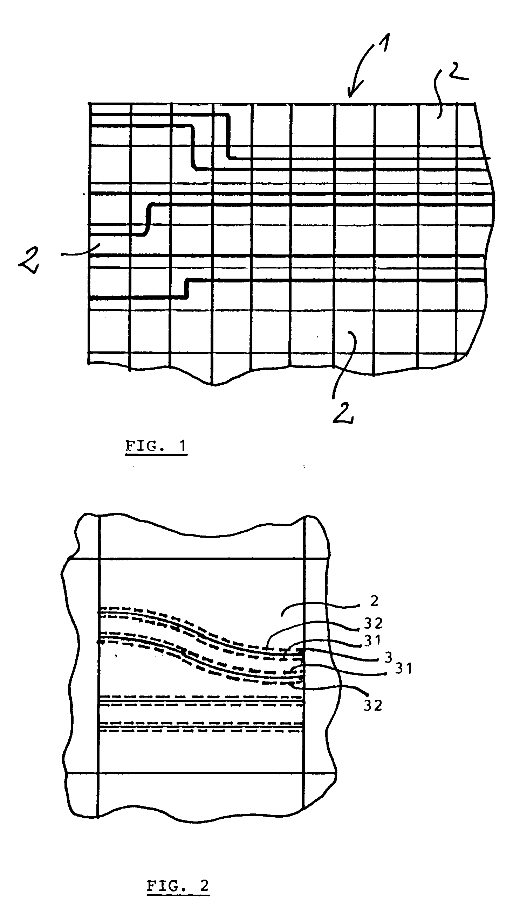

Zur Durchführung der Prüfung im makroskopischen Bereich wird eine zu prüfende Leiterplatte 1 mit einem speziellen Leiterbahnmuster in der aus der Fig. 1 ersichtlichen Weise in bestimmte Ausschnitte bzw. Fenster 2 unterteilt. Diese Fenster 2 werden, wenn die Leiterbahnen aus Kupfer bestehen, im Hinblick auf ihren Kupferanteil untersucht. Dies erfolgt dadurch, daß für jedes Fenster punktweise auf "Kupfer" oder "nicht Kupfer" bzw. "kupferfrei" geprüft wird, und daß zusätzlich noch die Koordinaten des Schwerpunktes der Kupferbereiche bzw. der kupferfreien Bereiche festgehalten werden. Beispielsweise entsprechen dabei Kupferbereiche schwarzen Punkten und kupferfreie Bereiche weißen Punkten. Vorzugsweise werden für die Fenster 2 die jeweiligen Koordinaten der Schwerpunkte der Kupferbereiche ermittelt. Dadurch ergibt sich für jedes einzelne Fenster 2 durch Aufaddieren ein ganz bestimmter Grauwert, der ein ganz charakteristisches Identifizierungsmerkmal darstellt. Es kann zusätzlich auch der Schwerpunkt der schwarzen oder weißen Bereiche, beispielsweise der schwarzen Bereiche erfaßt werden. Auch dieser Schwerpunkt stellt für das ihm zugeordnete Fenster ein ganz charakteristisches Identifizierungsmerkmal dar. Einer der sogenannten Identifizierungsmerkmale oder beide der so gewonnenen Identifizierungsmerkmale jedes Fensters werden mit den gleichartigen Identifizierungsmerkmalen entsprechend der Fenster einer Master- bzw. Referenzleiterplatte verglichen. Dies bedeutet, daß bei diesem fensterweisen Vergleich jede Grauwert- und ggf. Schwerpunktverteilung eines Fensters 2 der zu prüfenden Leiterplatte 1, die von der Grauwert- und ggf. Schwerpunkverteilung eines entsprechenden Fensters der Master- bzw. Referenzplatte abweicht, auf einen Fehler hindeutet bzw. zu einer Fehleranzeige führt. Dadurch, daß von jedem Fenster einer Master- bzw. Referenzleiterplatte nur ein Grauwert und ggf. die Koordination des Schwerpunktes der Kupferbereiche oder der kupferfreien Bereiche gespeichert und später mit denjenigen des entsprechenden Fensters 2 der zu prüfenden Leiterplatte 1 verglichen werden müssen, ergibt sich eine entscheidende Verringerung der zu speichernden bzw. zu verarbeitenden Daten, die zu den bereits erwähnten Vorteilen führt.

Es wird darauf hingewiesen, daß die Leiterbahnen in bekannter Weise auch aus anderen Materialien bestehen können, da beim vorliegenden Verfahren lediglich der Kontrast zwischen den Leiterbahnbereichen und den leiterbahnfreien Bereichen erfaßt wird.

Die Größe der Fenster 2 wird in Abhängigkeit von der gewünschten Genauigkeit bestimmt. Allgemein kann gesagt werden, daß die Grauwertanalyse und ggf. die Schwerpunktmessung umso genauer ausgeführt werden müssen, je größer die Fenster 2 sind. Dies bedeutet, daß man, wenn man die Fenster zu groß macht, in einen Bereich kommt, in dem die natürlichen Fehler bei der Meßwertaufnahme in eine Größenordnung gelangen, die den zu erfassenden Fehlern etwa bei einer fehlenden Leiterbahn entsprechen, so daß dann kein vernünftiges Meßergebnis mehr erhalten wird. Zu große Fenster führen also zu zu großen Meßtoleranzen.

Aus den zuvor genannten Erwägungen heraus gelangt man beispielsweise bei der makroskopischen Betrachtung der aus der zuvor abgelaufenen "Design Rule"-Prüfung stammenden Meßergebnisse zu einer Datenreduzierung von 1:64. Es wird jedoch darauf hingewiesen, daß dieses bestimmte Reduzierungsmaß nur als Beispiel zu verstehen ist. Die wesentliche Forderung für das anzuwendende Reduzierungsmaß besteht darin, daß der Flächeninhalt, d.h. die Anzahl der Prüfpunkte des Fensters um einige 100 mal größer ist als die durch die Kamera bestimmte Bit-Einheit. Die Größe der Fenster wird so bemessen, daß bei der Auswertung das charakteristische Aussehen dieses Fensters, d.h. also der Kupfergehalt und dessen Anordnung bzw. die schwarzen oder weißen Bereiche und der Schwerpunkt dieser Bereiche, mit einer ausreichend großen Sicherheit beschrieben wird.

Die Auswertung erfolgt im einzelnen dadurch, daß die während der "Design Rule"-Prüfung sich ergebenden Daten parallel auf eine Zählvorrichtung zur fensterweisen Grauwert- und ggf. Schwerpunktsermittlung gegeben werden. Die Zählvorrichtung ermittelt dabei den Grauwert eines Fensters dadurch, daß die Anzahl der den Kupferbereichen entsprechenden Punkte und die Anzahl der kupferfreien Bereichen entsprechenden Punkte gezählt werden. Die Ermittlung des Schwerpunktes der Kupferbereiche erfolgt durch die koordinatenmäßige Erfassung der den Kupferbereichen bzw. den kupferfreien Bereichen entsprechenden Punkte in der X- und Y-Richtung des Fensters. Für jedes abgetastete Fenster wird auf diese Weise ein Grau- und ggf. Schwerpunktswert ermittelt. Diese Werte werden mit den gespeicherten Grau- und ggf. Schwerpunktswerten jeweils entsprechender Fenster einer Master- bzw. Referenzleiterplatte verglichen.

Die Einjustierung der zu prüfenden Leiterplatten erfolgt mit der Hilfe von Referenzpunkten, die beim Einrichten der Prüfmaschine einprogrammiert werden. Beispielsweise werden vier oder auch acht Referenzpunkte vorgegeben. Beim Einbringen der zu testenden Leiterplatte mißt die Maschine die Lage der Referenzpunkte und bestimmt so die tatsächliche Lage der Leiterplatte unter Berücksichtigung von Längentoleranzen. Diese Lagebestimmung erfolgt als Vorbereitungshandlung vor der "Design Rule"-Prüfung und der makroskopischen Prüfung. Ausgehend von dieser Lagebestimmung der Leiterplatte insgesamt erfolgt dann die Betrachtung der einzelnen Fenster, deren Größe beispielsweise 0,8 × 0,8 mm bzw. 32 × 32 Pixel entspricht, wobei ein Pixel eine von der Kamera gelieferte Bit-Einheit ist. Beispielsweise werden die einzelnen Fenster durch mäanderförmiges Abtasten der Leiterplatte durch die Kamera geliefert. Jede Abweichung oder fehlerhafte Veränderung der Leiterplatte 1 in einem Fenster 2 führt zu einer drastischen Veränderung der Dichte bzw. des Grauwertes und der Lage des Schwerpunktes der Kupferbereiche. Eine solche Veränderung der makroskopischen Werte kann ohne weiteres erkannt werden. Wenn beispielsweise in einem Fenster eine Leiterbahn fehlt, wird dies sofort erkannt, weil sich der für das Fenster ermittelte Grauwert erheblich ändert. Das gleiche tritt auch dann ein, wenn sich die Lage einer Leiterbahn gegenüber dem Sollwert erheblich verändert, weil sich dann z.B. der Schwerpunkt der schwarzen Bereiche bzw. der Kupferbereiche erheblich verändert. Durch die makroskopische Prüfung läßt sich mit hoher Wahrscheinlichkeit bestimmen, daß eine entscheidende Abweichung vom Sollwert vorliegt, ohne daß die genaue Lage von bestimmten Bildwerten erfaßt wird.

Bei der Verwendung eines Filmes an der Stelle einer Referenzleiterplatte ist es möglich, die während des Herstellungsprozesses entstehenden Unterschiede zwischen dem Film und der Leiterplatte einfach auszuwerten. Auf der geprüften Leiterplatte ergeben sich in Abhängigkeit von dem Ätzprozeß grundsätzlich etwas breitere Leiterbahnen als auf dem Film. Diese Unterschiede lassen sich bei der erfindungsgemäß gewählten Erfassungsmethode sehr einfach prozentual darstellen, da bekannt ist, daß sich die Kupferwerte um einen bestimmten bzw. vorgegebenen Wert verändern. Dies bedeutet, daß an der Stelle eines richtigen Bild-Processings einfache Zahlenwertvergleiche ausreichend sind.

Bei der Herstellung von Leiterbahnen ergeben sich aufgrund des Herstellungsprozesses oft Leiterbahnen, die im Verhältnis zu den gewünschten Abmessungen vergrößert oder verschmälert sind. Dies kann aber dann dazu führen, daß sich in einem Fenster bei gleichem Kupferanteil unterschiedliche Dichteveränderungen ergeben. Um diese Veränderungen erfassen zu können bzw. um feststellen zu können, ob diese Veränderungen in Abhängigkeit vom Herstellungsprozeß akzeptabel sind oder nicht, kann man gemäß einer besonders vorteilhaften Weiterbildung der Erfindung in der Musterleiterplatte die Länge aller Grenzlinien zwischen den Leiterbahnen (Kupferbereiche) und den leiterbahnfreien Bereichen pro Fenster feststellen. Dies erfolgt dadurch, daß man alle Punkte im Grenzlinienbereich zählt und die sich ergebenden Werte abspeichert. Dies sind genauer gesagt die Kupferpunkte, die an einen kupferfreien Bereich angrenzen oder die Punkte des kupferfreien Bereiches, die an einen Kupferbereich angrenzen.

In der Praxis geht man dabei an der Musterleiterplatte folgendermaßen vor. Es werden die Punkte als Grenzpunkte bestimmt, für die in einer Umgebungsrichtung ein anderer Wert als für den Punkt selbst ermittelt wird. Dabei können die Umgebungsrichtungen willkürlich, z.B. entsprechend den vier Achsen eines Koordinatensystemes oder auch feiner unterteilt festgelegt werden. Es wird dann die Summe dieser Punkte ermittelt. Dabei ergibt sich, da jeder Grenzpunkt automatisch doppelt erfaßt wird, das in der Fig. 2 für jede Grenzlinie durch die gestrichelten Linien dargestellte Gebiet. Für jede Leiterbahn ergibt sich in der ebenfalls aus der Fig. 2 ersichtlichen Weise ein Gebiet, das im folgenden als Schlauchgebiet bezeichnet wird. Bei der fenstermäßigen Erfassung der Leiterplatten werden die Punkte nicht berücksichtigt, die im Schlauchgebiet liegen. Dies bedeutet, daß in der Fig. 2 an der Stelle der tatsächlichen Leiterbahn 3 auch Leiterbahnen als richtig erkannt werden, die entsprechend den strichlierten Linien 31 verschmälert oder entsprechend den strichlierten Linien 32 verbreitert sind. Dies bedeutet, daß auf Herstellungsprozesse zurückzuführende Verbreiterungen und Verschmälerungen der Leiterbahnen nicht berücksicht werden und darauf zurückzuführende Fehler eliminiert werden.

In Wirklichkeit werden infolge des ausgeführten nicht analytischen Zählverfahrens auch Bahnverbreiterungen bzw. Bahnverschmälerungen erfaßt, die nicht einer Verbreiterung bzw. Verschmälerung um 1 Pixel entsprechen. Dies ist darauf zurückzuführen, weil in Abhängigkeit von dem geometrischen Verlauf der Leiterbahnen bzw. Grenzlinien (schräger Verlauf usw.) auch eine geringere Pixelzahl, beispielsweise die um einen Faktor von 0,3 verringerte Pixelzahl, ermittelt werden kann. Dies bedeutet, daß das dann erfaßte Schlauchgebiet enger ist als das durch 2 Pixel bestimmte Schlauchgebiet, so daß das gesamte Verfahren feiner wird.

Um zu einer erheblichen Reduzierung von Information beim Abspeichern des Bildes eines Fensters zu gelangen, d.h., wenn die abzuspeichernde Datenmenge in Grenzen gehalten werden soll, kann im makroskopischen Bereich pro Fenster lediglich die Bestimmung des Grauwerts oder die Bestimmung der Grauwerte und der Schwerpunktwerte vorgenommen werden. Es ist auch denkbar, lediglich eine Grauwert- und Granulationserfassung auszuführen. In diesem Fall kann die Menge der zu erfassenden Daten etwa um 2/3 verringert werden, wobei der Fehlerabdeckungsprozeß noch sehr gut ist und wobei die Parameterveränderung bei der Herstellung der Leiterplatten gleichzeitig über den Granulationswert normiert werden kann.

**Patentansprüche**

1. Verfahren zum optischen Prüfen von Leiterplatten oder dergleichen auf funktionale Fehler, wie zum Beispiel Kurzschlüsse, Unterbrechungen und Fehlbestückungen, mit Hilfe einer rechnergesteuerten Prüfvorrichtung mit einer oder mehreren Kameras, bei dem zunächst im Rahmen einer Abtastung der Oberfläche der Leiterplatte, die Einhaltung einer vorgegebenen Mindestbreite der Leiterbahnen bzw. eines vorgegebenen Mindestabstandes derselben voneinander punktweise überprüft wird, wobei die im Rahmen der Abtastung der Leiterplatte (1) entstehenden Daten jeweils bestimmten Fenstern (2) einer vorgewählten Größe zugeordnet werden, in die die Leiterplatte (1) unterteilt wird, dadurch gekennzeichnet, daß für jedes Fenster (2) lediglich die Summe der den Leiterbahnen entsprechenden Bildpunkte oder der Bildpunkte, die leiterbahnfreien Bereichen entsprechen, erfaßt und mit zuvor bestimmten Sollwerten entsprechender Fenster einer Referenzleiterplatte oder dergleichen verglichen wird.

2. Verfahren nach Anspruch 1, dadurch gekennzeichnet, daß für jedes Fenster zusätzlich auch der Schwerpunkt der Bereiche der Bildpunkte, die den Leiterbahnen oder den leiterbahnfreien Bereichen entsprechen durch koordinatenmäßiges Erfassen der den Leiterbahnbereichen bzw. den leiterbahnfreien Bereichen entsprechenden Punkte ermittelt und mit zuvor bestimmten Schwerpunkt-Sollwerten entsprechender Fenster einer Referenzplatte oder dergleichen verglichen wird.

3. Verfahren nach Anspruch 1 oder 2, dadurch gekennzeichnet, daß zusätzlich in jedem Fenster (2) ein Granulationswert dadurch bestimmt wird, daß für jedes Fenster der Referenzplatte alle Bildpunkte, die sich an einer Grenzlinie zwischen einer Leiterbahn und dem leiterbahnfreien Bereich befinden, dadurch gezählt werden, daß alle Bildpunkte gezählt werden, für die in einer Umgebungsrichtung ein anderer Wert als der für den Punkt selbst ermittelte Wert ermittelt wird, und daß die entsprechenden Summen der jeweiligen Fenster der Leiterbahnen mit diesem Granulationswert korrigiert werden.

**Claims**

1. Method for the optical testing of printed circuit boards or the like for functional faults, such as short-circuits, interruptions and faulty components, with the aid of a computer-controlled testing apparatus having one or more cameras, in which first of all in the scanning of the surface of the circuit board the maintaining of a given minimum width of the conductive tracks or of a given minimum spacing thereof from one another is checked point-by-point, the data produced during the scanning of the circuit board (1) being allocated in each case to certain windows (2) of a preselected size into which the circuit board (1) is subdivided, characterised in that for each window (2) only the total of the picture points corresponding to the conductive tracks or of the picture points which correspond to regions free of conductive tracks is detected and compared with previously determined desired values of corresponding windows on a reference circuit board or the like.

2. Method according to Claim 1, characterised in that for each window in addition the point of concentration of the regions of the picture points which correspond to the conductive tracks or the regions free of conductive tracks is also determined by coordinate-wise detection of the points corresponding to the conductive track regions or to the regions free of conductive tracks and is compared with previously determined desired point of concentration values of corresponding windows of a reference board or the like.

3. Method according to Claim 1 or 2, characterised in that in addition a granulation value is determined in each window (2) in that for each window of the reference plate all the picture points which are located on a boundary line between a conductive track and the region free of conductive tracks are counted in that all the picture points are counted for which in a surrounding direction a different value from the value determined for the point itself is determined, and that the corresponding totals of the respective windows of the conductive tracks are corrected with this granulation value.

**Revendications**

1. Procédé pour la vérification optique de circuits imprimés ou d'éléments semblables, quant à des défauts fonctionnels comme par exemple des courts-circuits, des interruptions et des équipements erronés, au moyen d'un dispositif de vérification, commandé par ordinateur, et avec une ou plusieurs caméras, dans lequel on contrôle d'abord point par point dans le cadre d'une exploration de la surface du circuit imprimé un respect d'une largeur minimum donnée des pistes conductrices et respectivement une distance minimum donnée de ces dernières de l'une à l'autre, les données apparaissant dans le cadre de l'exploration du circuit imprimé (1) étant adjointes chaque fois à des fenêtres (2) d'une grandeur présélectionnée dans lesquelles le circuit imprimé (1) est divisé, caractérisé en ce que pour chaque fenêtre (2) la somme des points d'image correspondant aux pistes conductrices ou des points qui correspondent à des zones sans piste conductrice est saisie et est comparée à des valeurs de consigne, déterminées auparavant, de fenêtres correspondantes d'un circuit imprimé de référence ou d'un élément de même genre.

2. Procédé suivant la revendication 1, caractérisé en ce qu'en plus pour chaque fenêtre aussi le centre de gravité des zones des points d'image qui correspondent aux pistes conductrices ou aux zones sans piste conductrice est déterminé par une saisie, suivant des coordonnées, des points correspondants aux zones à pistes conductrices et respectivement aux zones sans piste conductrice et est comparé à des valeurs de consigne de centre de gravité, déterminées auparavant, de fenêtres correspondantes d'un circuit de référence ou d'un élément du même genre.

3. Procédé suivant l'une ou l'autre des revendications 1 et 2, caractérisé en ce qu'en plus une valeur de granulation est déterminée dans chaque fenêtre (2) par le fait que pour chaque fenêtre du circuit de référence tous les points d'image qui sont situés sur une ligne de frontière entre une piste conductrice et la zone sans piste conductrice sont comptés par le fait que sont comptés tous les points d'image pour lesquels est déterminée dans une direction environnante une valeur différente de la valeur déterminée pour le point lui-même, et en ce que les sommes correspondantes des fenêtres respectives des pistes conductrices sont corrigées avec cette valeur de granulation.

FIG. 1

FIG. 2